(19) Europäisches Patentamt
European Patent Office
Office européen des brevets

(11) **EP 3 650 680 B1**

(12) **EUROPEAN PATENT SPECIFICATION**

(45) Date of publication and mention of the grant of the patent:
**01.09.2021 Bulletin 2021/35**

(21) Application number: **18828659.5**

(22) Date of filing: **05.07.2018**

(51) Int Cl.:
*F02B 31/08* (2006.01)     *F02F 1/42* (2006.01)
*B22C 9/02* (2006.01)     *B22C 9/10* (2006.01)
*B22C 9/24* (2006.01)     *F02B 31/04* (2006.01)
*F02F 1/24* (2006.01)     *B22C 9/22* (2006.01)
*F02F 1/00* (2006.01)     *B22D 15/02* (2006.01)
*B22D 18/04* (2006.01)

(86) International application number:
**PCT/JP2018/025449**

(87) International publication number:
**WO 2019/009347 (10.01.2019 Gazette 2019/02)**

(54) **CYLINDER HEAD**

ZYLINDERKOPF

CULASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2017 JP 2017132201**

(43) Date of publication of application:
**13.05.2020 Bulletin 2020/20**

(73) Proprietor: **Honda Motor Co., Ltd.**
**Tokyo 107-8556 (JP)**

(72) Inventors:
• **OIKAWA, Hironobu**
**Hagagun**
**Tochigi 321-3395 (JP)**
• **KAMEDA, Keigo**
**Hagagun**
**Tochigi 321-3395 (JP)**

• **TSUJI, Masahiro**
**Hagagun**
**Tochigi 321-3395 (JP)**
• **FUJIKUBO, Makoto**
**Wako-shi**
**Saitama 351-0193 (JP)**
• **NAKAMURA, Yohei**
**Wako-shi**
**Saitama 351-0193 (JP)**

(74) Representative: **Kiwit, Benedikt**
**Mitscherlich PartmbB**
**Patent- und Rechtsanwälte**
**Sonnenstraße 33**
**80331 München (DE)**

(56) References cited:
**JP-A- H10 231 729     JP-A- H11 210 479**
**JP-A- H11 218 029     JP-A- 2016 173 049**
**US-A- 4 930 468**

# Description

## Technical Field

The present invention relates to a cylinder head configuring an internal combustion engine.

## Background Art

In a cylinder head configuring an internal combustion engine, a metal-made partitioning section may be provided in an intake passage, and an inside of the intake passage may be partitioned into a plurality of intake passages, that is, a main flow path and a tumble flow path, see JP H 11210479 A. In this case, flowability increases due to a tumble vortex flow occurring in an intake air introduced into a combustion chamber, so fast combustion occurs, and a fuel efficiency effect can be achieved.

The applicants of the present application have proposed a technique where this kind of partitioning section is obtained integrally with a cylinder head by casting using a sand core, in Japanese Laid-Open Patent Publication No. 2016-173049.

## Summary of Invention

In order to generate a tumble vortex flow in the combustion chamber, directivity of the tumble flow path is sometimes considered. At that time, when the partitioning section is manufactured integrally with the cylinder head by casting, a shape of the partitioning section sometimes becomes intricate.

However, when attempting to obtain the partitioning section by casting, it is required to consider fluidity to the partitioning section.

A main object of the present invention is to provide a cylinder head that contributes to an improvement in casting characteristics of a partitioning section and to generation of a tumble vortex flow.

According to an embodiment of the present invention, there is provided a cylinder head (32) which comprises a partitioning section (81) partitioning an intake passage (80) into a main flow path (80B) and a tumble flow path (80A) and in which a thickness of the partitioning section (81) differs between an upstream side and a downstream side in a flow direction of an intake air, wherein

in a cross section taken along a longitudinal direction of the intake passage (80), if a length of a first virtual perpendicular line (VL1) extending from an end section of the tumble flow path (80A) in a width direction and reaching the main flow path (80B) in a thinnest region (MI) where the thickness of the partitioning section (81) is smallest is assumed to be L1, and a length of a second virtual perpendicular line (VL2) extending from the end section of the tumble flow path (80A) in the width direction and reaching the main flow path (80B) in a thickest region (MA) where the thickness of the partitioning section (81) is largest is assumed to be L2, then L1 > L2 holds.

In the present invention, the above-described configuration is adopted, whereby in the thinnest region where the thickness of the partitioning section is smallest, end sections of the tumble flow path and the main flow path in the width direction are arranged to be greatly separated.

In a hollow section for forming this kind of partitioning section, a side opening being an inflow port of a molten metal will be largest in a thinnest region shaping section, in which the thinnest region is formed, of the sand core. Therefore, it is easy for the molten metal to flow into the hollow section even in the thinnest region shaping section. That is, even when forming a region where the thickness is small in the partitioning section, fluidity in a vicinity of a hollow place where the region is molded can be improved.

Hence, fluidity to the partitioning section can be improved and the partitioning section can be formed, even when the shape of the partitioning section becomes intricate. Moreover, because the partitioning section of intricate shape can be formed, a contribution can be made to generation of a tumble flow vortex.

Note that, a thickness of the partitioning section (81) in the thinnest region (MI) and a thickness of the partitioning section (81) in the thickest region (MA) are, respectively, a smallest thickness and a largest thickness. It is preferable that if the former is assumed to be T1 and the latter is assumed to be T2, then the following expression (1) holds between T1, T2 and L1, L2.

$$L1/T1 > L2/T2 \ldots (1)$$

Satisfying such a relational expression results in circulation of the molten metal improving.

It is preferable that an inclined section that inclines from a center of the partitioning section (81) in the width direction to a side of the tumble flow path (80A) is provided in an end surface of the partitioning section (81) on the side of the tumble flow path (80A), and that in the cross section taken along the longitudinal direction of the intake passage (80), an inclination angle ($\theta$4) of the inclined section in the thinnest region (MI) is set larger than an inclination angle ($\theta$5) of the inclined section in the thickest region (MA).

In this case, an inclined surface should be formed in the side opening of the hollow section, of the sand core. That is, an inclination angle of an inclined surface in the thinnest region shaping section where the thinnest region is formed is larger than an inclination angle of an inclined surface in a thickest region shaping section where the thickest region is formed. The side opening becomes proportionately larger, similarly to as described above. Hence, fluidity in the thinnest region shaping section will be good also when this configuration is adopted. Ultimately, a partitioning section of excellent quality and improved degree-of-freedom of thickness change (degree-of-freedom of shape) can be obtained with a desired thickness.

It is preferable that the inclined section (100) in the thinnest region (MI) is configured from a plurality of inclined sections (102, 104) whose inclination angles differ. In this case, the plurality of inclined surfaces whose inclination angles differ are formed in the side opening of the sand core. Hence, flow of molten metal changes gradually in a vicinity of the side opening. As a result, the molten metal will flow smoothly into the hollow section, so it becomes even easier for the thinnest region to be obtained with a desired thickness. That is, a partitioning section of excellent quality and improved degree-of-freedom of shape can be even more easily obtained.

Note that, in this case, a total ($\theta1 + \theta2$) of the inclination angles of the plurality of inclined sections should be made larger than an inclination angle ($\theta3$) of the inclined section in the thickest region.

Moreover, it is preferable that, when there have been drawn, in the thinnest region (MI), an upstream-side first imaginary line (LN1) passing through a center of the intake passage (80) in the width direction and an upstream-side second imaginary line (LN2) orthogonal to the upstream-side first imaginary line (LN1) and passing through an end section of the partitioning section (81) on the side of the tumble flow path (80A), and there have been drawn, in the thickest region (MA), a downstream-side first imaginary line (LN3) passing through the center of the intake passage (80) in the width direction and a downstream-side second imaginary line (LN4) orthogonal to the downstream-side first imaginary line (LN3) and passing through the end section of the partitioning section (81) on the side of the tumble flow path (80A), an area (S1) of a region (Ar1), which is formed by an intersection point (P1) of the upstream-side first imaginary line (LN1) and the upstream-side second imaginary line (LN2) and the inclined section (100) in the thinnest region (MI), is larger than an area (S2) of a region (Ar2), which is formed by an intersection point (P2) of the downstream-side first imaginary line (LN3) and the downstream-side second imaginary line (LN4) and the inclined section (106) in the thickest region (MA).

Also in this configuration, the side opening will become larger. Hence, fluidity in the thinnest region shaping section will be good also when this configuration is adopted, so a partitioning section of excellent quality and improved degree-of-freedom of shape can be obtained.

Note that in all cases, it is preferable that a width (W2) of the main flow path (80B) in the thickest region (MA) is set larger than a width (W1) of the main flow path (80B) in the thinnest region (MI). Although the thickness of the partitioning section is large in the thickest region, increasing the width of the main flow path as described above makes it possible for a cross-sectional area (an intake area) of the main flow path to be secured. Therefore, even at a high load time when an opening degree of a throttle valve increases, intake air can be passed through the main flow path with a demanded flow rate.

In order to achieve downsizing of the cylinder head (32), sometimes, in the thickest region (MA), an intake valve surrounding section (42a) surrounding an intake valve (46) is bulged out into the main flow path (80B). In this configuration, a radius of curvature (R2) of a width of the main flow path (80B) should be set larger than a radius of curvature (R1) of a width of the main flow path (80B) in the thinnest region (MI).

Even under circumstances that the intake valve surrounding section is blocking a part of the main flow path in the thickest region or a vicinity thereof, the radius of curvature in the width direction is large in this region. A cross-sectional area (an intake area) is proportionately secured. Therefore, even at a high load time when the opening degree of the throttle valve increases, intake air can be passed through the main flow path with a demanded flow rate.

Furthermore, it is preferable that in the cross section taken along the longitudinal direction of the intake passage (80), a downstream end (80Ab) of the tumble flow path (80A) is directed to a ceiling surface (32a) of a combustion chamber (36), the partitioning section (81) is curved to a side of the combustion chamber (36) in the intake passage (80), and the tumble flow path (80A) is provided with: a first curved section (82) that curves in a direction of separating from the main flow path (80B); and a second curved section (83) that curves in a direction of approaching the main flow path (80B).

Thus, by curving the partitioning section to the combustion chamber side and configuring the tumble flow path in an S shape, degree-of-freedom of shape of the tumble flow path in the intake passage can be improved. This makes it possible for the downstream end of the tumble flow path to be directed to the ceiling surface of the combustion chamber, without greatly changing cross-sectional areas of the tumble flow path and the main flow path. As a result, it becomes easy for a tumble vortex flow to be generated in the combustion chamber.

According to the present invention, the inside of an intake passage of a cylinder head is provided with a partitioning section in which the side opening (a clearance between the tumble flow path and the main flow path in the width direction of the intake passage) in the thinnest region is larger than that in the thickest region, or which includes, in the side opening of the thinnest region, an inclined section whose inclination angle is larger than that of the inclined section of the side opening of the thickest region. When the partitioning section of such a shape is formed by the sand core, fluidity of molten metal in the vicinity of the side opening becomes good.

That is, the molten metal flows easily into the thinnest region shaping section where the thinnest region is formed. Therefore, a thinnest region of good quality can be formed with a desired thickness, so degree-of-freedom of shape of the partitioning section or tumble flow path can be improved.

In a cylinder head having such a partitioning section or tumble flow path, it becomes easy for a tumble vortex flow to be generated in the combustion chamber. It hence becomes possible to configure an internal combustion engine with excellent fuel efficiency characteristics and so on.

Brief Description of Drawings

FIG. 1 is a schematic cross-sectional view of essential parts of a power unit including a cylinder head according to an embodiment of the present invention;
FIG. 2 is an enlarged view of essential parts of FIG. 1;
FIG. 3 is a detailed view of a part of FIG. 2;
FIG. 4 is a schematic view of a cross section taken along the line IV-IV in FIG. 3, looking in the direction of the arrows;
FIG. 5 is a schematic view of a cross section taken along the line V-V in FIG. 3, looking in the direction of the arrows;
FIG. 6 is a schematic side cross-sectional view of a sand core for forming an intake passage and a partitioning section;
FIG. 7 is a cross-sectional view taken along the line VII-VII in FIG. 6, looking in the direction of the arrows; and
FIG. 8 is a cross-sectional taken along the line VIII-VIII in FIG. 6, looking in the direction of the arrows.

Description of Embodiments

A preferred embodiment of a cylinder head according to the present invention will be presented and described in detail below with reference to the accompanying drawings. Note that, unless otherwise specifically indicated, front-rear, left-right, and up-down indicated below refer to front-rear, left-right, and up-down at a time when a user is seated in a driving seat of a vehicle installed with a power unit configured including the cylinder head according to the present embodiment. In the present embodiment, the vehicle is a small vehicle, specifically, a motorcycle. Moreover, "FR" in the drawings indicates a front side, and "UP" in the drawings indicates an upper side.

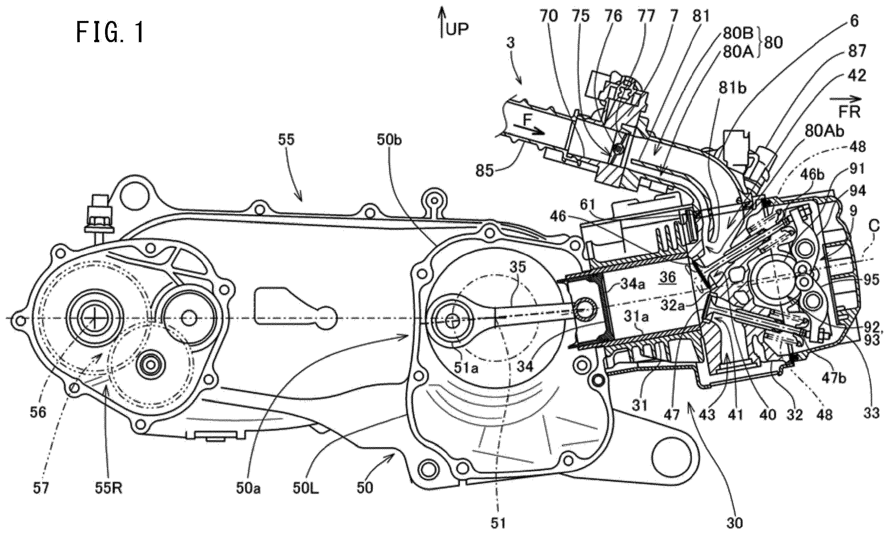

FIG. 1 is a schematic cross-sectional view of essential parts of a power unit 3 configured including a cylinder head 32 according to the present embodiment. This power unit 3 has, in a front section thereof, a single cylinder 4-stroke cycle air-cooled internal combustion engine (hereafter, also written simply as "internal combustion engine") 30.

A cylinder block 31, the cylinder head 32, and a cylinder head cover 33 that configure the internal combustion engine 30 and are greatly forwardly inclined substantially horizontally in a front section of a power unit case 50 configuring a crank case section 50a, are fastened so as to be sequentially stacked, in the power unit 3. Note that in FIG. 1, cross sections of left half surfaces of the cylinder block 31, the cylinder head 32, and the cylinder head cover 33 are shown, and a left case half-body 50L of the power unit case 50 having a mating surface 50b with an unillustrated right case half-body is shown with the mating surface 50b directed to this side of a paper surface.

That is, the power unit case 50 is configured by combining the left case half-body 50L and the previously described right case half-body, and the right case half-body forms a right half-body of the crank case section 50a. Moreover, a front section of the left case half-body 50L forms a left half-body of the crank case section 50a, and a rear section of the left case half-body 50L forms, to front and rear between a crank shaft 51 and a rear axle 56, a power transmission case section 55 in which an unillustrated long belt-type continuously variable transmission and a transmission device including a reduction gear mechanism 57 or the like are accommodated.

Thus, in the power unit case 50, the power transmission case section 55 provided with the belt-type continuously variable transmission or the like extends integrally from the crank case section 50a to a left side rear. Moreover, a rear section of the power transmission case section 55 is provided with the rear axle 56 being an output shaft of the power unit 3. An unillustrated rear wheel is attached to the rear axle 56.

In an upper section of the power unit 3, an inlet pipe 6 extends out curving to the rear from an upper section of the greatly forwardly inclined cylinder head 32 of the internal combustion engine 30. Moreover, a throttle body 7 connected to the inlet pipe 6 is positioned above the cylinder block 31, and an air cleaner device 86 connected to the throttle body 7 via a connecting tube 85 is arranged above the power transmission case section 55.

On the other hand, an exhaust pipe 38 extends out downwardly from a lower section of the cylinder head 32. The exhaust pipe 38 inclines rightward bending to the rear, and extends further to the rear to be connected to an unillustrated muffler.

The reduction gear mechanism 57 between the crank shaft 51 and the rear axle 56 is accommodated inside a right-side open surface 55R of the rear section of the power transmission case section 55, and is covered by an unillustrated reducer case. An output shaft of the reduction gear mechanism 57 is the rear axle 56. That is, rotational power of the crank shaft 51 of the internal combustion engine 30 is transmitted to the rear wheel via the belt-type continuously variable transmission and the reduction gear mechanism 57 in the power transmission case section 55.

A piston 34 that makes a reciprocating movement within a cylinder bore 31a of the cylinder block 31 is coupled, via a connecting rod 35, to a crank pin 51a of the crank shaft 51 of the crank case section 50a. A combustion chamber 36 is formed between a top surface 34a of the piston 34 accommodated in a freely sliding manner in the cylinder bore 31a and a combustion chamber ceiling surface 32a of the cylinder head 32 faced by the top surface 34a.

In the present embodiment, the internal combustion engine 30 adopts an SOHC-type 2-valve system, and has a valve train 9 provided in the cylinder head 32. The cylinder head 32 is overlaid with and thereby covered by the cylinder head cover 33 such that the valve train 9 is covered.

In order to transmit power to the valve train 9, an unillustrated endless cam chain passes through the crank case section 50a, the cylinder block 31 and an unillustrated cam chain chamber provided on one side of the cylinder head 32 in the crank shaft 51 direction, and is thereby stretched across a cam shaft 91 and the crank shaft 51. The cam shaft 91 rotates synchronously with the crank shaft 51 with half rotational speed of the crank shaft 51. Note that in the cylinder head 32, an unillustrated ignition plug is inserted into the combustion chamber 36 from an opposite side to the cam chain chamber (the other side in the crank shaft 51 direction).

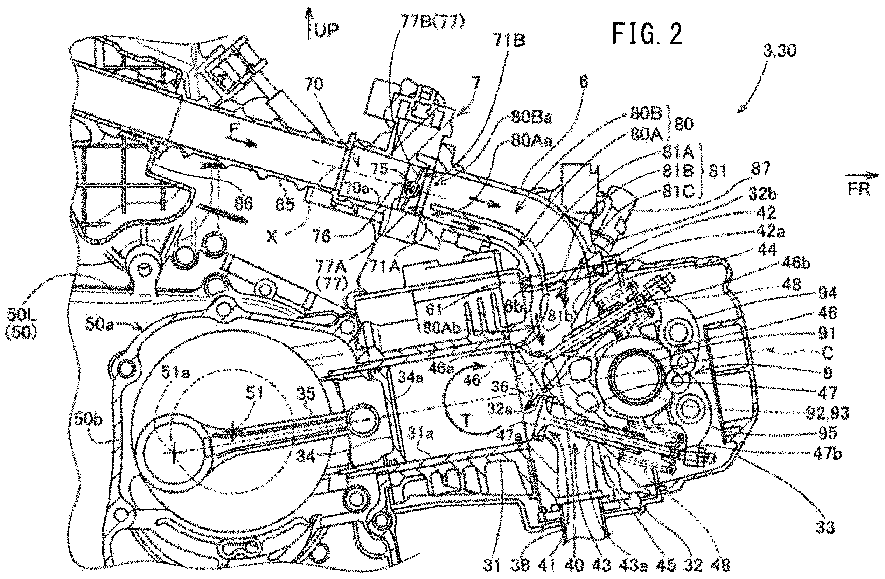

As shown in FIG. 1 and FIG. 2 which is an enlarged view of essential parts of FIG. 1, the cylinder head 32 is greatly forwardly inclined in such a manner that a cylinder axis C is close to a horizontal direction. In this cylinder head 32, an intake port 42 and an exhaust port 43 are formed extending out from, respectively, an intake valve port 40 and an exhaust valve port 41 opened in the combustion chamber ceiling surface 32a, while curving in directions of separating upwardly/downwardly from each other.

An upstream end of the intake port 42 opens toward an upper side of the cylinder head 32 and is connected to the inlet pipe 6, thereby configuring a continuous intake passage 80, and the throttle body 7 is connected to an upstream side of the inlet pipe 6. On the other hand, a downstream end of the exhaust port 43 opens toward a lower side of the cylinder head 32, and is coupled to the exhaust pipe 38.

A curved outer wall section 42a (an intake valve surrounding section) of the intake port 42 in the cylinder head 32 is integrally fitted with an intake valve guide 44 which is cylindrically shaped. Moreover, an intake valve 46 is slidably supported by the intake valve guide 44, and the intake valve 46 opens/closes the intake valve port 40, facing the combustion chamber 36, of the intake port 42.

A curved outer wall section 43a of the exhaust port 43 in the cylinder head 32 is integrally fitted with an exhaust valve guide 45. An exhaust valve 47 slidably supported by the exhaust valve guide 45 opens/closes the exhaust valve port 41, facing the combustion chamber 36, of the exhaust port 43.

The intake valve 46 and the exhaust valve 47 both have their umbrella sections 46a, 47a biased upwardly by a valve spring 48, so as to close the intake valve port 40 and the exhaust valve port 41 facing the combustion chamber 36. On the other hand, an intake rocker arm 94 and an exhaust rocker arm 95 that rock when abutting on an intake cam 92 and an exhaust cam 93 of the cam shaft 91 are coupled to tips of the intake valve 46 and the exhaust valve 47. Due to the intake rocker arm 94 and the exhaust rocker arm 95 rocking, stem ends 46b, 47b are pushed down with a predetermined timing, whereby the intake valve 46 and the exhaust valve 47 open. As a result, the intake port 42 and the combustion chamber 36 communicate, or the exhaust port 43 and the combustion chamber 36 communicate, and intake and exhaust are performed with a predetermined timing.

In order for even more preferable combustion to be achieved in the combustion chamber 36, the internal combustion engine 30 has an intake structure for imparting a tumble vortex flow T, that is, a vertical rotation of a fuel/air mixed gas in the combustion chamber 36.

In detail, the inlet pipe 6 is connected to the upstream end of the intake port 42 of the internal combustion engine 30 via an insulator 61, thereby configuring the continuous intake passage 80 of substantially circular cross section, and the throttle body 7 is connected to the upstream side of the inlet pipe 6.

The throttle body 7 includes an intake path 70 of substantially circular cross section configuring a part of the intake passage 80 extending to the combustion chamber 36 of the internal combustion engine 30, and the upstream side thereof is connected to the air cleaner device 86 via the connecting tube 85.

The throttle body 7 comprises a throttle valve 75. The throttle valve 75 is axially supported in a freely rotating manner within the throttle body 7 by a throttle valve shaft 76 that perpendicularly intersects an intake flow direction F in the intake path 70, that is, perpendicularly intersects a center axis X of the intake path 70, and is orientated substantially horizontally. A flow path area of the intake path 70 is variably controlled by rotation of the throttle valve 75.

The throttle valve 75 is of butterfly type, and includes: the throttle valve shaft 76; and a disk-shaped valve body 77 comprising a one-end-side valve body 77A and an other-end-side valve body 77B that are fixed to the throttle valve shaft 76 and rotate integrally therewith. Now, the intake path 70 of the throttle body 7 is orientated substantially horizontally, a lower-end-side valve body of the throttle body 7 is the one-end-side valve body 77A, and an upper-end-side valve body of the throttle body 7 is the other-end-side valve body 77B. Note that here, the cylinder head cover 33 side and the cylinder block 31 side in the cylinder axis C direction are expressed as an "upper" side and a "lower" side, respectively.

The valve body 77 is biased in a counterclockwise direction in FIGS. 1 and 2 by an unillustrated return spring. By both the one-end-side valve body 77A and the other-end-side valve body 77B of the valve body 77 abutting on an inner surface 70a of the intake path 70, the throttle valve 75 becomes fully closed. On the other hand, the throttle valve 75 opens when the valve body 77 pivots in a clockwise direction due to, for example, operation of a driver, and both the one-end-side valve body 77A and the other-end-side valve body 77B consequently separate from the inner surface 70a.

The intake passage 80 is provided with a partitioning section 81 that extends from the inlet pipe 6 to the intake port 42. A downstream side of the throttle valve 75, of the intake passage 80 is divided along the intake flow direction F by this partitioning section 81. That is, the partitioning section 81 partitions the intake passage 80 into: a tumble flow path 80A on a lower side configured in such a manner that intake air having flowed therethrough generates the tumble vortex flow T within the combustion chamber 36; and a main flow path 80B on an upper side whose cross-sectional area (intake area) is larger than that of the tumble flow path 80A.

Note that, although in the present embodiment, the lower side of the intake passage 80 partitioned by the partitioning section 81 forms the tumble flow path 80A, and the upper side thereof forms the main flow path 80B, the present invention is not specifically limited to this.

The partitioning section 81 includes an inlet-pipe-side partitioning section 81A, an insulator-side partitioning section 81B, and an intake-port-side partitioning section 81C, and these are configured so as to be continuous from an upstream side to a downstream side of an intake flow.

Note that a surface of the partitioning section 81 in a width direction of the intake passage 80 and the throttle valve shaft 76 are parallel. An inlet opening 80Aa of the tumble flow path 80A on the inlet pipe 6 side opens close to a downstream side of the one-end-side valve body 77A of the throttle valve 75, and an inlet opening 80Ba of the main flow path 80B opens close to a downstream side of the other-end-side valve body 77B of the throttle valve 75.

As shown in FIG. 2, a downstream-side end section 81b positioned within the intake port 42, of the partitioning section 81 bends toward the cylinder block 31 side.

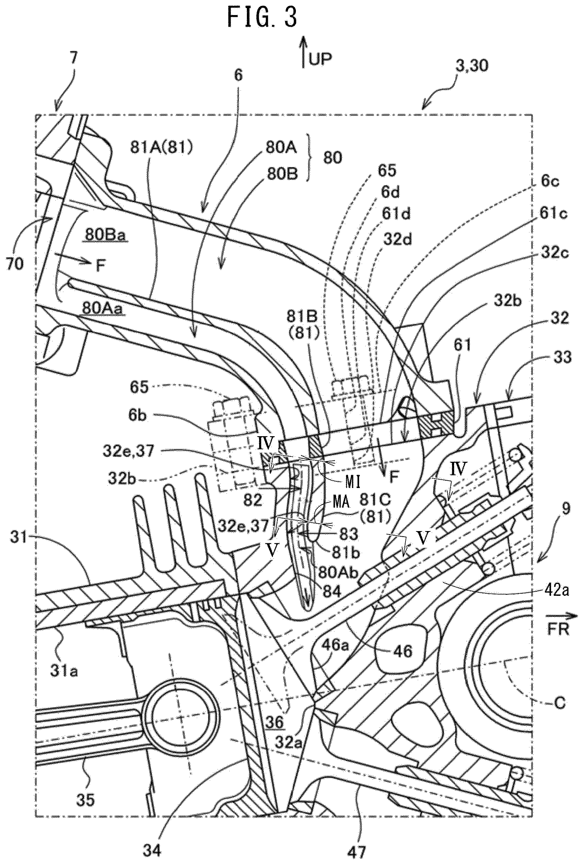

Moreover, as shown in FIG. 3 which is a detailed view of a part of FIG. 2, the tumble flow path 80A comprises: a first curved section 82 curving in a direction of separating from the main flow path 80B or combustion chamber 36 in the cylinder axis C direction; and a second curved section 83 curving in a direction of approaching the main flow path 80B or combustion chamber 36 in the cylinder axis C direction, and the tumble flow path 80A thereby has an S shape. Due to these first curved section 82 and second curved section 83, a downstream end 80Ab of the tumble flow path 80A is formed so as to be directed to the combustion chamber ceiling surface 32a of the cylinder head 32. As will be mentioned later, it therefore becomes easy for the tumble vortex flow T to be generated in the combustion chamber 36.

That is, in the present embodiment, the downstream-side end section 81b of the partitioning section 81 (the intake-port-side partitioning section 81C) is bent toward the cylinder block 31 side, and the downstream end 80Ab of the tumble flow path 80A is configured in an S shape. As a result, degrees-of-freedom of passage shape and disposition of the tumble flow path 80A improve, and the downstream end 80Ab of the tumble flow path 80A can be directed to the combustion chamber ceiling surface 32a, without cross-sectional areas of the tumble flow path 80A and the main flow path 80B being greatly changed.

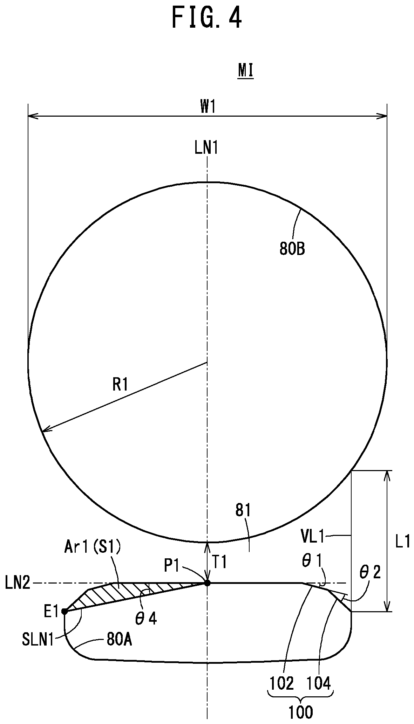

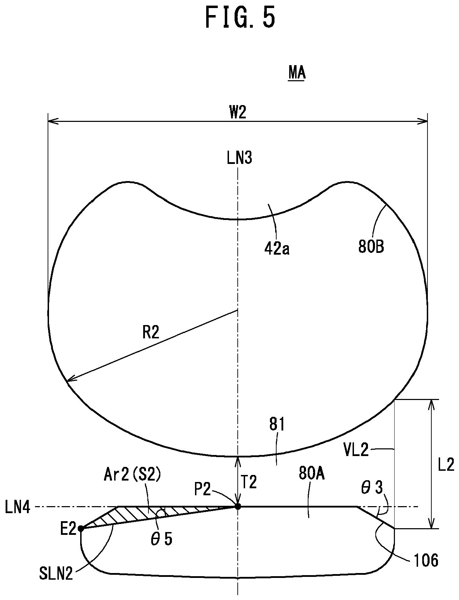

A thickness of the partitioning section 81 differs between an upstream side and a downstream side in the intake flow direction F. Specifically, the thickness is large in a vicinity of the inlet-pipe-side partitioning section 81A on the upstream side, and is small in a vicinity of the intake-port-side partitioning section 81C on the downstream side (the combustion chamber 36 side). Moreover, the thickness of the partitioning section 81 is smallest in a region cut by the line IV-IV in FIG. 3, and is largest in a region cut by the line V-V. That is, the region shown in FIG. 4 is a thinnest region MI, and the region shown in FIG. 5 is a thickest region MA.

In FIG. 4, which is a schematic view of a cross section taken along the line IV-IV and looking in the direction of the arrows in FIG. 3, a horizontally long slit shape represents the tumble flow path 80A, and a hole shape forming substantially a perfect circle represents the main flow path 80B.

The thickness of the partitioning section 81 is defined as a shortest approach distance between the tumble flow path 80A and the main flow path 80B. That is, it is a length of a perpendicular line having a horizontal upper side of the tumble flow path 80A as its starting point and intersecting a lowest elevation position of the main flow path 80B. The perpendicular line is a part of an upstream-side first imaginary line LN1 passing through a center of the intake passage 80 in the width direction.

In the thinnest region MI, this perpendicular line becomes shorter than a perpendicular line drawn in another region. Hereafter, the length of the perpendicular line in the thinnest region MI will be assumed to be a smallest thickness T1. Moreover, in the thinnest region MI, a length of a first imaginary perpendicular line VL1 extending vertically upwardly from an end section of the tumble flow path 80A in the width direction and reaching the main flow path 80B will be assumed to be L1.

In the thickest region MA shown in FIG. 5 which is a schematic view of a cross section taken along the line V-V and looking in the direction of the arrows in FIG. 3, the curved outer wall section 42a being the intake valve surrounding section bulges out to the main flow path 80B side (refer to FIG. 3). Therefore, in the thickest region MA, the main flow path 80B is shaped having its upper side sunken due to the curved outer wall section 42a overhanging a part of the upper side.

Furthermore, a radius of curvature R1 of the width of the main flow path 80B in the thinnest region MI is smaller than a radius of curvature R2 of the width of the main flow path 80B in the thickest region MA. In other words, the radius of curvature R2 of the width in the thickest region MA is larger than the radius of curvature R1 of the width in the thinnest region MI. That is, a relationship of R1 < R2 holds. Further still, in the thickest region MA, a width W2 of the main flow path 80B is set larger than a width W1 of the main flow path 80B in the thinnest region MI.

In the thickest region MA, the previously described perpendicular line becomes longer than a perpendicular line drawn in another region. Hereafter, the length of this perpendicular line in the thickest region MA will be assumed to be a largest thickness T2. Moreover, in the thickest region MA, a length of a second imaginary perpendicular line VL2 extending vertically upwardly from the end section of the tumble flow path 80A in the width direction and reaching the main flow path 80B will be assumed to be L2. Note that the previously described perpendicular line is a part of a downstream-side first imaginary line LN3 passing through the center of the intake passage 80 in the width direction.

In the present embodiment, the smallest thickness T1, the length L1 of the first imaginary perpendicular line VL1, the largest thickness T2, and the length L2 of the second imaginary perpendicular line VL2 are in a relationship where the following expression (1) holds.

$$L1/T1 \; > \; L2/T2 \; ... \; (1)$$

Typically, setting is made such that T1 < T2 and L1 > L2. That is, a clearance between the end section of the tumble flow path 80A in the width direction and the main flow path 80B in the thinnest region MI is preferably set larger than a clearance between the end section of the tumble flow path 80A in the width direction and the main flow path 80B in the thickest region MA.

Moreover, as shown in FIG. 4, the thinnest region MI of the partitioning section 81 has an end surface on the tumble flow path 80A side provided with an upstream-side inclined section 100 that inclines from a center of the partitioning section 81 in the width direction to the tumble flow path 80A side. The upstream-side inclined section 100 is formed of: a first upstream-side inclined section 102 that inclines gently downwardly as approaching from a center in the width direction (an intersection point P1) toward a side opening side; and a second upstream-side inclined section 104 that is continuous from the first upstream-side inclined section 102 and inclines steeply downwardly as approaching toward the side opening side. That is, an inclination angle θ1 of the first upstream-side inclined section 102 is set smaller than an inclination angle θ2 of the second upstream-side inclined section 104.

The inclination angle θ1 is for example set to not more than 5°, and preferably to between 1° and 2°, with respect to the horizontal direction. Moreover, the inclination angle θ2 is for example set to not more than 25°, and preferably to not more than 20°, with respect to the horizontal direction.

As shown in FIG. 5, the thickest region MA also similarly has an end surface on the tumble flow path 80A side provided with a downstream-side inclined section 106 that inclines from the center of the partitioning section 81 in the width direction (an intersection point P2) to the tumble flow path 80A side. An inclination angle θ3 of the downstream-side inclined section 106 is smaller than a total of the inclination angle θ1 and the inclination angle θ2. That is, the magnitude relationship described below exists between θ1, θ2, and θ3.

$$\theta1 \; + \; \theta2 \; > \; \theta3$$

The hatching in FIG. 4 shows a region Ar1 that, when there have been drawn the upstream-side first imaginary line LN1 and an upstream-side second imaginary line LN2 orthogonal to the upstream-side first imaginary line LN1 and passing through an end section of the partitioning section 81 on the tumble flow path 80A side, is formed by the intersection point P1 of the upstream-side first imaginary line LN1 and the upstream-side second imaginary line LN2 and the first upstream-side inclined section 102 and the second upstream-side inclined section 104 in the thinnest region MI. The region Ar1 includes a straight line SLN1 of the second upstream-side inclined section 104 extending from a width-side end section end point E1 of the tumble flow path 80A to the intersection point P1. An intersection angle of this straight line SLN1 and the upstream-side second imaginary line LN2 is assumed to be an inclination angle θ4.

Similarly, the hatching in FIG. 5 indicates a region Ar2 formed by the intersection point P2 of the downstream-side first imaginary line LN3 and the downstream-side second imaginary line LN4 and the downstream-side inclined section 106 in the thickest region MA. The region Ar2 includes a straight line SLN2 of the downstream-side inclined section 106 extending from a width-side end section end point E2 of the tumble flow path 80A to the intersection point P2. An intersection angle of this straight line SLN2 and the downstream-side second imaginary line LN4 is assumed to be an inclination angle θ5.

When each of areas of the regions Ar1, Ar2 are assumed to be S1, S2, it holds that S1 > S2. Moreover, θ4 > θ5.

Due to the thickness of the partitioning section 81 being appropriately made different (changed) in this way, the tumble flow path 80A partitioned by the partitioning section 81 can be changed to a desired shape. Moreover, as will be mentioned later, by the shapes of the tumble flow path 80A and the main flow path 80B in the thinnest region MI and the thickest region MA being configured as described above, it becomes easy for the partitioning section 81 to be formed by casting integrally with the cylinder head 32.

A fuel injection valve 87 is attached to the intake passage 80 including the tumble flow path 80A and the main flow path 80B described above. The fuel injection valve 87 is inserted from the outside above the main flow path 80B of the inlet pipe 6 and is disposed so as to supply fuel by injection to the intake valve port 40.

The cylinder head 32 comprises, at an upstream end of the intake port 42, a connecting surface 32b to which the inlet pipe 6 is connected. A connecting section 6b of the inlet pipe 6 is connected by fastening, via the insulator 61, to this connecting surface 32b. The intake passage 80 at the connecting surface 32b is orthogonal to the connecting surface 32b.

The insulator 61 is provided with flange sections 32c, 6c, 61c for fastening. The flange sections 32c, 6c, 61c are respectively provided with screw-in sections 32d, 6d, 61d in such a manner that the intake passage 80 is sandwiched from left and right, and, by fastening members 65 being screwed into these screw-in sections 32d, 6d, 61d, the inlet pipe 6 is joined by fastening, via the insulator 61, to the cylinder head 32.

The cylinder head 32 according to the present embodiment is basically configured as above, and the operational advantages thereof will be next described.

When the motorcycle is driven, a mixed gas of fuel and air is taken into the combustion chamber 36 of the internal combustion engine 30. The internal combustion engine 30 compresses and burns the mixed gas, whereby a driving force for causing the motorcycle to travel is obtained. The air (intake air) for this purpose passes through the intake passage 80.

When the internal combustion engine 30 is at low load, the throttle valve 75 is gradationally-open and guides the intake air into the tumble flow path 80A. On the other hand, when the internal combustion engine 30 is at high load, the intake air can be guided unhindered into the tumble flow path 80A and the main flow path 80B according to an opening degree of the throttle valve 75 (a throttle opening degree).

Note that "gradationally-open" means up to a predetermined opening degree when driving the internal combustion engine 30 at low load from a time of full closure of the throttle valve 75, and the predetermined opening degree is a throttle opening degree of 30%, for example. However, the predetermined opening degree can be set arbitrarily according to characteristics required of the internal combustion engine 30 at low load, and is not specifically limited to 30%.

When the throttle valve 75 changes from a fully-closed position to a gradationally-open position, the intake air passes from an upstream side of the intake path 70 through a gap (hereafter, called "acute-angle-side gap") 71A formed between the one-end-side valve body 77A and the inner surface 70a of the intake path 70 and a gap (hereafter, called "obtuse-angle-side gap") 71B formed between the other-end-side valve 77B and the inner surface 70a of the intake path 70, and flows into the intake passage 80 from a downstream side of the intake path 70.

The intake air that has passed through the acute-angle-side gap 71A enters the tumble flow path 80A disposed on a downstream side of the one-end-side valve body 77A of the throttle valve 75, as a strong converging flow. On the other hand, the intake air that has passed through the obtuse-angle-side gap 71B spreads as a flow diffusing over a wide negative pressure region, in the main flow path 80B disposed on a downstream side of the other-end-side valve body 77B of the throttle valve 75, and a part thereof flows backward to mix with the converging flow that has passed through the acute-angle-side gap 71A. That is, the intake air is guided into the tumble flow path 80A. Due to the above, the intake air flows unevenly in the tumble flow path 80A.

The thickness of the partitioning section 81 (the inlet-pipe-side partitioning section 81A) for forming the tumble flow path 80A changes from the upstream side to the downstream side in the intake flow direction F. In the present embodiment, although the inlet pipe 6 extends out curving to a vehicle rear side from the connecting section 6b with the cylinder head 32 and the intake passage 80 is curved, the thickness of the partitioning section 81 changes, so it becomes easy for a cross-sectional area (an intake area) ratio between the tumble flow path 80A and the main flow path 80B to be arbitrarily set.

Now, as described above, the downstream end 80Ab of the tumble flow path 80A is directed to the ceiling surface 32a of the combustion chamber 36 and the partitioning section 81 is curved to the combustion chamber 36 side in the intake passage 80. Furthermore, a vicinity of the downstream end 80Ab of the tumble flow path 80A is provided with: the first curved section 82 curving so as to separate from the main flow path 80B or combustion chamber 36; and the second curved section 83 curving to the main flow path 80B side or combustion chamber 36 side. Due to the first curved section 82 and the second curved section 83, the vicinity of the downstream end 80Ab of the tumble flow path 80A curves in an S shape.

The intake air that has been passed through the tumble flow path 80A of the above-described shape is introduced into the combustion chamber 36 while rising slightly. That is, the intake air is directed to the ceiling surface 32a in the combustion chamber 36. Thus, in the present embodiment, by curving the partitioning section 81 to the combustion chamber 36 side and configuring the downstream end 80Ab of the tumble flow path 80A in an S shape, degree-of-freedom of shape of the tumble flow path 80A can be improved, and the downstream end 80Ab of the tumble flow path 80A can be directed to the combustion chamber 36, without greatly changing the intake area ratio between the tumble flow path 80A and the main flow path 80B.

Moreover, the downstream end 80Ab of the tumble flow path 80A of the cylinder head 32 has an end edge flow path wall 84 in order to maintain a state in which the downstream end 80Ab is directed to the combustion chamber ceiling surface 32a to the end edge, and opens into the main flow path 80B to join the main flow path 80B.

Therefore, even when the opening of the downstream end 80Ab of the tumble flow path 80A is enlarged, the intake air is prevented from diffusing to a whole rear section of the umbrella section 46a of the intake valve 46. As a result, guidance of the intake air from the tumble flow path 80A to a portion between a part (close to the exhaust valve 47) of a rear surface of the umbrella section 46a of the intake valve 46 and the combustion chamber ceiling surface 32a is strengthened. Thus, strengthening of the tumble vortex flow T in the combustion chamber 36 is achieved.

That is, as shown by the arrows in FIG. 2, the intake air flowing through the tumble flow path 80A, after having been passed above the umbrella section 46a of the intake valve 46, can be caused to flow into the cylinder bore 31a from between the rear surface of the umbrella section 46a of the intake valve 46 close to the exhaust valve 47 and the combustion chamber ceiling surface 32a. As a result, the tumble vortex flow T is easily generated in the combustion chamber 36.

When an accelerator opening degree of the throttle valve 75 exceeds the gradationally-open position, the intake air also passes through the main flow path 80B. Now, the curved outer wall section 42a bulges out on the downstream side of the main flow path 80B. Therefore, an upper section of the main flow path 80B is blocked by the curved outer wall section 42a. Accordingly, in the present embodiment, the radius of curvature R2 of the width of the main flow path 80B in the thickest region MA is made larger than the radius of curvature R1 of the width of the main flow path 80B in the thinnest region. Moreover, in the thickest region MA, the width W2 of the main flow path 80B is larger than the width W1 of the main flow path 80B in the thinnest region MI. Therefore, on the downstream side where the curved outer wall section 42a bulges out and the thickness of the partitioning section 81 is large, the intake area of the main flow path 80B is secured.

That is, in the present embodiment, to compensate for the upper side of the main flow path 80B being blocked by the curved outer wall section 42a, the width of the main flow path 80B is increased to secure the intake area. Therefore, intake air of a demanded flow rate can be supplied to the combustion chamber 36 at a time of full opening of the throttle valve 75, and so on.

Moreover, a plurality of bent sections 37 of different curvatures are provided in a cylinder-head-side inner wall section 32e, in the tumble flow path 80A. As a result, degree-of-freedom of passage shape of the tumble flow path 80A improves.

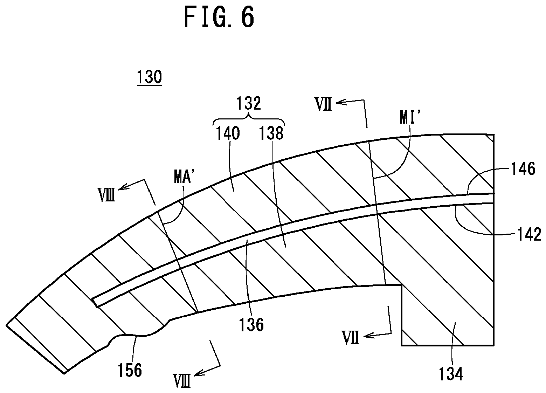

The cylinder head 32 having the partitioning section 81 formed within the intake passage 80 can be obtained by casting using a sand core. FIG. 6 is a schematic side cross-sectional view of a sand core 130 which is accommodated in a cavity of a casting device and is used for forming the intake passage 80 and the partitioning section 81. This sand core 130 includes: an intake passage shaping section 132 for forming the intake passage 80; and a baseboard section 134 not contributing to molding of the cylinder head 32.

The intake passage shaping section 132 is shaped so as to project from the baseboard section 134, and, after having curved slightly along the horizontal direction, curve slightly also downwardly. Moreover, a long hollow section 136 extending from a combustion-chamber-side end section of the intake passage shaping section 132 to the baseboard section 134 is formed. This hollow section 136 is used for forming the partitioning section 81. That is, the intake passage shaping section 132 is divided into a tumble flow path shaping section 138 and a main flow path shaping section 140, with the hollow section 136 as a boundary.

A bottom wall 142 and a ceiling wall 146 are formed within the hollow section 136 as a first wall surface and a second wall surface that face each other. In order to obtain the partitioning section 81 whose thickness becomes larger as approaching the upstream side, a clearance between the bottom wall 142 and the ceiling wall 146 is set so as to be small in a baseboard-section-side end section and large in the combustion-chamber-side end section.

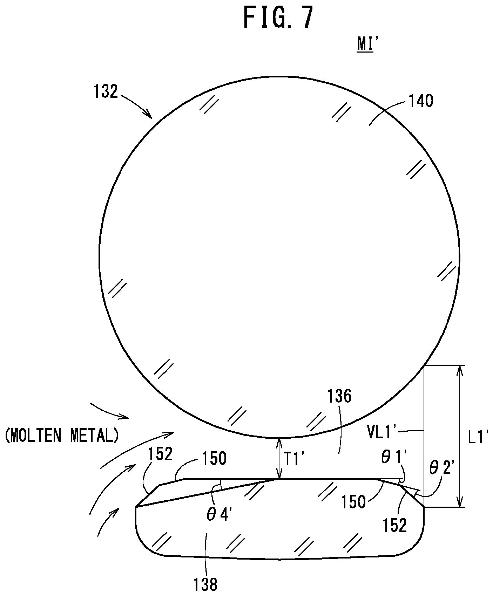

The cross section taken along the line VII-VII in FIG. 6 shows a thinnest region shaping section MI' for forming the thinnest region MI in the partitioning section 81. As shown in FIG. 7 which is a cross-sectional view taken along the line VII-VII looking in the direction of the arrows, this thinnest region shaping section MI' has: a first upstream-side inclined surface 150 for forming the first upstream-side inclined section 102; and a second upstream-side inclined surface 152 for forming the second upstream-side inclined section 104. An inclination angle $\theta 1'$ of the first upstream-side inclined surface 150 corresponds to the inclination angle $\theta 1$ of the first upstream-side inclined section 102, and an inclination angle $\theta 2'$ of the second upstream-side inclined surface 152 corresponds to the inclination angle $\theta 2$ of the second upstream-side inclined section 104. Hence, $\theta 1' < \theta 2'$. Moreover, $\theta 4'$ corresponds to the inclination angle $\theta 4$ of the upstream-side inclined section 100.

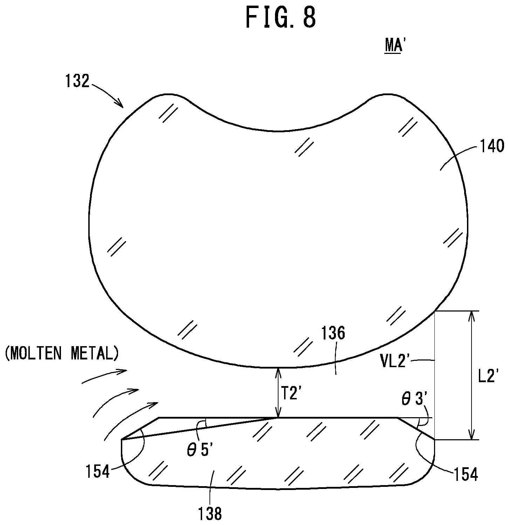

On the other hand, the cross section taken along the line VIII-VIII in FIG. 6 shows a thickest region shaping section MA' for forming the thickest region MA. As shown in FIG. 8 which is a cross-sectional view taken along the line VIII-VIII looking in the direction of the arrows, the thickest region shaping section MA' has a downstream-side inclined surface 154 for forming the downstream-side inclined section 106. Inclination angles $\theta 3', \theta 5'$ in FIG. 8 respectively correspond to the inclination angles $\theta 3, \theta 5$ in FIG. 5. Note that $\theta 1' + \theta 2' > \theta 3'$, and $\theta 4' > \theta 5'$.

The relationship of expression (2) described below holds between heights T1', T2' of the hollow sections 136 and lengths L1', L2' of a first imaginary perpendicular line VL1' and a second imaginary perpendicular line VL2' shown in FIGS. 7 and 8, similarly to how the above-described relationship of expression (1) holds.

$$L1'/T1' > L2'/T2' \quad ... \quad (2)$$

Furthermore, a lower surface of the tumble flow path shaping section 138 is provided with a curved section forming section 156 for forming the first curved section 82 and the second curved section 83 that are continuous to each other.

The sand core 130 of such configuration is set in the casting device, and next, mold closing is performed to form the cavity. Subsequently, a molten metal of an aluminum alloy or the like is introduced into the cavity. A tip of the intake passage shaping section 132 faces a combustion chamber molding section for forming the combustion chamber 36. Note that in this case, the cylinder head 32 is formed by low-pressure casting, hence a liquid level rise direction of the molten metal intersects a longitudinal direction of the hollow section 136. Generally, when an advancing direction of the molten metal in the cavity and an inflow direction of the molten metal into the hollow section differ in this way, the smaller a separation interval between the bottom wall and the ceiling wall is, the more fluidity to the hollow section decreases. Therefore, it is essentially not easy to form a region of small thickness.

Now, as shown in FIG. 7, in the thinnest region shaping section MI', although the height T1' of the hollow section 136 is smaller than T2' in the thickest region shaping section MA', the relationship of L1'/T1' > L2'/T2' holds, so the straight-line distance L1' from an end section of the hollow section 136 to the main flow path shaping section 140 is larger than L2' in the thickest region shaping section MA'. Moreover, the first upstream-side inclined surface 150 and the second upstream-side inclined surface 152 are formed in the bottom wall 142. Due to these first upstream-side inclined surface 150 and second upstream-side inclined surface 152, the hollow section 136 being a space between the tumble flow path shaping section 138 and the main flow path shaping section 140 inclines so as to expand as a side opening is approached from a center in the width direction. Furthermore, the area S1 of the region Ar1 is set larger than the area S2 of the region Ar2, and setting is made such that $\theta1' + \theta2' > \theta3'$, and $\theta4' > \theta5'$.

Hence, even though the opening of the hollow section 136 intersects the liquid level rise direction, and the clearance between the tumble flow path shaping section 138 and the main flow path shaping section 140 is small, it becomes easy for the molten metal to flow into the hollow section 136 of the thinnest region shaping section MI'. That is, in the thinnest region shaping section MI', fluidity to the hollow section 136 becomes good.

Moreover, in the thinnest region shaping section MI', there exist two inclined surfaces (the first upstream-side inclined surface 150 and the second upstream-side inclined surface 152) whose inclination angles differ. Therefore, an inflow speed of the molten metal to the hollow section 136 from the side opening changes gradually, and hence the molten metal flows smoothly into the hollow section 136. Moreover, since the inclination angle $\theta2'$ of the second upstream-side inclined surface 152 is larger than the inclination angle $\theta1'$ of the first upstream-side inclined surface 150, and the side opening is therefore gradually narrowed, it can be avoided that a vortex flow is generated in the molten metal or that a pressure loss occurs. Therefore, casting defects are suppressed to enable the partitioning section 81 of good quality to be obtained.

On the other hand, in the thickest region shaping section MA', the clearance between the tumble flow path shaping section 138 and the main flow path shaping section 140 is larger than that in the thinnest region shaping section MI'. Therefore, the molten metal enters the hollow section 136 comparatively easily. In addition, the thickest region shaping section MA' also has the downstream-side inclined surface 154 formed in the bottom wall 142. This too results in fluidity to the thickest region shaping section MA' also being good. It hence becomes easy to obtain the thickest region MA having a cross-sectional shape corresponding to a cross-sectional shape of the thickest region shaping section MA'.

As the molten metal cools and solidifies, it leads to the cylinder head 32 as a solidified article being obtained. This cylinder head 32 includes the intake passage 80 that includes the partitioning section 81 having the thinnest region MI shown in FIG. 4 and the thickest region MA shown in FIG. 5. Moreover, the first curved section 82 and the second curved section 83, which correspond to the curved section forming section 156 provided in the tumble flow path shaping section 138, are formed in the tumble flow path 80A.

By configuring as above, the cylinder head 32 that makes it easy for the tumble vortex flow T to be generated in the combustion chamber 36 is obtained. In the power unit 3 configured including this cylinder head 32, fast combustion occurs in the combustion chamber 36 of the internal combustion engine 30, so fuel efficiency characteristics, and so on, are expected to improve.

The present invention is not specifically limited to the above-described embodiment, and may be variously changed in a range not departing from the scope of the claims.

For example, the upstream-side inclined section 100 is not specifically required to be configured by a plurality of inclined sections, and may be configured by a single inclined section. Moreover, it is also possible for both the upstream-side inclined section 100 and the downstream-side inclined section 106 to be configured by a plurality of inclined sections.

Furthermore, when the first curved section 82 and the second curved section 83 are formed in the tumble flow path 80A, these should be formed in a vicinity of the downstream end 80Ab. That is, a configuration may be adopted whereby a short linear section is formed on the downstream side of the second curved section 83.

Reference Signs List

| 3 | power unit |
|---|---|
| 6 | inlet pipe |
| 7 | throttle body |
| 30 | internal combustion engine |
| 31 | cylinder block |
| 32 | cylinder head |
| 32a | combustion chamber ceiling surface |
| 37 | bent section |
| 40 | intake valve port |
| 42 | intake port |
| 46 | intake valve |
| 47 | exhaust valve |
| 75 | throttle valve |
| 76 | throttle valve shaft |
| 80 | intake passage |
| 80A | tumble flow path |
| 80B | main flow path |
| 81 | partitioning section |
| 82 | first curved section |
| 83 | second curved section |
| 100 | upstream-side inclined section |
| 102 | first upstream-side inclined section |
| 104 | second upstream-side inclined section |
| 106 | downstream-side inclined section |
| 130 | sand core |
| 132 | intake passage shaping section |
| 136 | hollow section |
| 138 | tumble flow path shaping section |
| 140 | main flow path shaping section |
| 142 | bottom wall |
| 146 | ceiling wall |
| 150 | first upstream-side inclined surface |
| 152 | second upstream-side inclined surface |
| 154 | downstream-side inclined surface |
| 156 | curved section forming section |
| MA | thickest region |
| MI | thinnest region |
| MA' | thickest region shaping section |
| MI' | thinnest region shaping section |

**Claims**

1. A cylinder head (32) which comprises a partitioning section (81) partitioning an intake passage (80) into a main flow path (80B) and a tumble flow path (80A) and in which a thickness of the partitioning section (81) differs between an upstream side and a downstream side in a flow direction of an intake air, the cylinder head (32) being **characterized in that** in a cross section taken along a longitudinal direction of the intake passage (80), if a length of a first virtual perpendicular line (VL1) extending from an end section of the tumble flow path (80A) in a width direction and reaching the main flow path (80B) in a thinnest region (MI) where the thickness of the partitioning section (81) is smallest is assumed to be L1, and a length of a second virtual perpendicular line (VL2) extending from the end section of the tumble flow path (80A) in the width direction and reaching the main flow path (80B) in a thickest region (MA) where the thickness of the partitioning section (81) is largest is assumed to be L2, then L1 > L2 holds.

2. The cylinder head (32) according to claim 1, **characterized in that** if a smallest thickness of the partitioning section (81) in the thinnest region (MI) is assumed to be T1, and a largest thickness of the partitioning section (81) in the thickest region (MA) is assumed to be T2, then the following expression (1) holds.

$$L1/T1 > L2/T2 \ldots (1)$$

3. The cylinder head (32) according to claim 1 or 2, **characterized in that** an inclined section that inclines from a center of the partitioning section (81) in the width direction to a side of the tumble flow path (80A) is provided in an end surface of the partitioning section (81) on the side of the tumble flow path (80A), and in the cross section taken along the longitudinal direction of the intake passage (80), an inclination angle ($\theta$4) of the inclined section (100) in the thinnest region (MI) is larger than an inclination angle ($\theta$5) of the inclined section (106) in the thickest region (MA).

4. The cylinder head (32) according to claim 3, **characterized in that** the inclined section (100) in the thinnest region (MI) is configured from a plurality of inclined sections (102, 104) whose inclination angles differ, and a total ($\theta$1 + $\theta$2) of the inclination angles of the plurality of inclined sections (102, 104) is larger than an inclination angle ($\theta$3) of the inclined section (106) in the thickest region (MA).

5. The cylinder head (32) according to claim 3 or 4, **characterized in that** when there have been drawn, in the thinnest region (MI), an upstream-side first imaginary line (LN1) passing through a center of the intake passage (80) in the width direction and an upstream-side second imaginary line (LN2) orthogonal to the upstream-side first imaginary line (LN1) and passing through an end section of the partitioning section (81) on the side of the tumble flow path (80A), and there have been drawn, in the thickest region (MA), a downstream-side first imaginary line (LN3) passing through the center of the intake passage (80) in the width direction and a downstream-side second imaginary line (LN4) orthogonal to the downstream-side first imaginary line (LN3) and passing through the end section of the partitioning section (81) on the side of the tumble flow path (80A), an area (S1) of a region (Ar1), which is formed by an intersection point (P1) of the upstream-side first imaginary line (LN1) and the upstream-side second imaginary line (LN2) and the inclined section (100) in the thinnest region (MI), is larger than an area (S2) of a region (Ar2), which is formed by an intersection point (P2) of the downstream-side first imaginary line (LN3) and the downstream-side second imaginary line (LN4) and the inclined section (106) in the thickest region (MA).

6. The cylinder head (32) according to any one of claims 1 to 5, **characterized in that**
a width (W2) of the main flow path (80B) in the thickest region (MA) is larger than a width (W1) of the main flow path (80B) in the thinnest region (MI).

7. The cylinder head (32) according to any one of claims 1 to 6, **characterized in that** in the thickest region (MA), an intake valve surrounding section (42a) surrounding an intake valve (46) bulges out into the main flow path (80B), and a radius of curvature (R2) of a width of the main flow path (80B) is larger than a radius of curvature (R1) of a width of the main flow path (80B) in the thinnest region (MI).

8. The cylinder head (32) according to any one of claims 1 to 7, **characterized in that**
in the cross section taken along the longitudinal direction of the intake passage (80), a downstream end (80Ab) of the tumble flow path (80A) is directed to a ceiling surface (32a) of a combustion chamber (36), the partitioning section (81) curves to a side of the combustion chamber (36) in the intake passage (80), and the tumble flow path (80A) is provided with: a first curved section (82) that curves in a direction of separating from the main flow path (80B); and a second curved section (83) that curves in a direction of approaching the main flow path (80B).

**Patentansprüche**

1. Zylinderkopf (32), der einen Unterteilungsabschnitt (81) aufweist, der einen Einlasskanal (80) in einen Hauptströmungspfad (80B) und einen Tumbleströmungspfad (80A) unterteilt, und in dem sich eine Dicke des Unterteilungsabschnitts (81) zwischen einer vorgelagerten Seite und einer nachgelagerten Seite in einer Strömungsrichtung einer Einlassluft unterscheidet, wobei der Zylinderkopf (32) **dadurch gekennzeichnet ist, dass**
in einem entlang einer Längsrichtung erstellten Querschnitt des Einlasskanals (80), wenn eine Länge der ersten virtuellen senkrechten Linie (VL1), die von einem Endabschnitt des Tumbleströmungspfads (80A) in einer Breitenrichtung verläuft und den Hauptströmungspfad (80B) in einem dünnsten Gebiet (MI) erreicht, an dem die Dicke des Unterteilungsabschnitts (81) am geringsten ist, als L1 angenommen wird, und eine Länge einer zweiten virtuellen senkrechten Linie (VL2), die vom Endabschnitt des Tumbleströmungspfads (80A) in der Breitenrichtung verläuft und den Hauptströmungspfad (80B) in einem dicksten Gebiet (MA) erreicht, an dem die Dicke des Unterteilungsabschnitts (81) am größten ist, als L2 angenommen wird, dann gilt L1 > L2.

2. Zylinderkopf (32) nach Anspruch 1,
**dadurch gekennzeichnet, dass**
wenn eine kleinste Dicke des Unterteilungsabschnitts (81) im dünnsten Gebiet (MI) als T1 angenommen wird, und eine größte Dicke des Trennbereichs (81) im dicksten Gebiet (MA) als T2 angenommen wird, dann gilt die folgende Gleichung (1).

$$L1 \, / \, T1 > L2 \, / \, T2 \quad ... \quad (1)$$

3. Zylinderkopf (32) nach Anspruch 1 oder 2,
**dadurch gekennzeichnet, dass**
ein Neigungsabschnitt, der sich von einer Mitte des Unterteilungsabschnitts (81) in der Breitenrichtung zu einer Seite des Tumbleströmungspfads (80A) neigt, in einer Endfläche des Unterteilungsabschnitts (81) an der Seite des Tumbleströmungsabschnitts (80A) vorgesehen ist, und
ein Neigungswinkel ($\theta4$) des Neigungsabschnitts (100) im dünnsten Gebiet (MI) im Querschnitt, der entlang der Längsrichtung des Einlasskanals (80) erstellt wird, größer als ein Neigungswinkel ($\theta5$) des Neigungsabschnitts (106) im dicksten Gebiet (MA) ist.

4. Zylinderkopf (32) nach Anspruch 3,
**dadurch gekennzeichnet, dass**
der Neigungsabschnitt (100) im dünnsten Gebiet (MI) aus einer Vielzahl von Neigungsabschnitten (102, 104) ausgestaltet ist, deren Neigungswinkel sich unterscheiden, und eine Summe ($\theta1 + \theta2$) der Neigungswinkel der Vielzahl der Neigungsabschnitte (102, 104) größer als ein Neigungswinkel ($\theta3$) des Neigungsabschnitts (106) im dicksten Gebiet (MA) ist.

5. Zylinderkopf (32) nach Anspruch 3 oder 4,
**dadurch gekennzeichnet, dass**

wenn im dünnsten Gebiet (MI) eine erste imaginäre Linie (LN1) an der vorgelagerten Seite, die durch eine Mitte des Einlasskanals (80) in der Breitenrichtung hindurchgeht, und eine zweite imaginäre Linie (LN2), die an der vorgelagerten Seite senkrecht zur ersten imaginären Linie (LN1) an der vorgelagerten Seite ist und durch einen Endabschnitt des Unterteilungsabschnitts (81) an der Seite des Tumbleströmungspfads (80A) hindurchgeht, eingezeichnet wird, und im dicksten Gebiet (MA) eine erste imaginäre Linie (LN3) an der nachgelagerten Seite, die durch die Mitte des Einlasskanals (80) in der Breitenrichtung hindurchgeht, und eine zweite imaginäre Linie (LN4), die an der nachgelagerten Seite senkrecht zur ersten imaginären Linie (LN3) an der nachgelagerten Seite ist und durch den Endabschnitt des Unterteilungsabschnitts (81) an der Seite des Tumbleströmungspfads (80A) hindurchgeht, eingezeichnet wird, ist eine Fläche (S1) eines Gebiets (Ar1), die durch einen Schnittpunkt (P1) der ersten imaginären Linie (LN1) an der vorgelagerten Seite und der zweiten imaginären Linie (LN2) an der vorgelagerten Linie und dem Neigungsabschnitt (100) im dünnsten Gebiet (MI) gebildet wird, größer als eine Fläche (S2) eines Gebiets (Ar2), die durch einen Schnittpunkt (P2) der ersten imaginären Linie (LN3) an der nachgelagerten Seite und der zweiten imaginären Linie (LN4) an der nachgelagerten Seite und dem Neigungsabschnitt (106) im dicksten Gebiet (MA) gebildet wird.

**6.** Zylinderkopf (32) nach einem der Ansprüche 1 bis 5, **dadurch gekennzeichnet, dass** eine Breite (W2) des Hauptströmungspfads (80B) im dicksten Gebiet (MA) größer als eine Breite (W1) des Hauptströmungspfads (80B) im dünnsten Gebiet (MI) ist.

**7.** Zylinderkopf (32) nach einem der Ansprüche 1 bis 6, **dadurch gekennzeichnet, dass** im dicksten Gebiet (MA) ein Einlassventil-Umgebungsabschnitt (42a), der ein Einlassventil (46) umgibt, sich im Hauptströmungspfad (80B) nach außen wölbt, und ein Radius der Krümmung (R2) einer Breite des Hauptströmungspfads (80B) größer als ein Radius der Krümmung (R1) einer Breite des Hauptströmungspfads (80B) im dünnsten Gebiet (MI) ist.

**8.** Zylinderkopf (32) nach einem der Ansprüche 1 bis 7, **dadurch gekennzeichnet, dass** in einem entlang der Längsrichtung des Einlasskanals (80) erstellten Querschnitt ein nachgelagertes Ende (80Ab) des Tumbleströmungspfads (80A) auf eine Dachfläche (32a) einer Verbrennungskammer (36) ausgerichtet ist, wobei sich der Unterteilungsabschnitt (81) zu einer Seite der Verbrennungskammer (36) im Einlasskanal (80) krümmt, und der Tumbleströmungspfad (80A) vorgesehen ist mit: einem ersten gekrümmten Abschnitt (82), der sich in einer Richtung der Wegführung vom Hauptströmungspfad (80B) krümmt; und einem zweiten gekrümmten Abschnitt (83), der in sich einer Richtung der Annäherung an den Hauptströmungspfad (80B) krümmt.

**Revendications**

**1.** Culasse (32) qui comprend une section de division (81) divisant un passage d'admission (80) en un trajet d'écoulement principal (80B) et un trajet d'écoulement tourbillonnant (80A) et dans laquelle une épaisseur de la section de division (81) diffère entre un côté amont et un côté aval dans une direction d'écoulement d'un air d'admission, la culasse (32) étant **caractérisée en ce que**
dans une section transversale prise suivant une direction longitudinale du passage d'admission (80), si une longueur d'une première ligne perpendiculaire virtuelle (VL1) s'étendant depuis une section d'extrémité du trajet d'écoulement tourbillonnant (80A) dans une direction de largeur et atteignant le trajet d'écoulement principal (80B) dans une région la plus mince (MI) où l'épaisseur de la section de division (81) est la plus petite est considérée comme L1, et une longueur d'une deuxième ligne perpendiculaire virtuelle (VL2) s'étendant depuis la section d'extrémité du trajet d'écoulement tourbillonnant (80A) dans la direction de largeur et atteignant le trajet d'écoulement principal (80B) dans une région la plus épaisse (MA) où l'épaisseur de la section de division (81) est la plus grande est considérée comme L2, alors L1 > L2 se vérifie.

**2.** Culasse (32) selon la revendication 1, **caractérisée en ce que**
si une épaisseur la plus petite de la section de division (81) dans la région la plus mince (MI) est considérée comme T1, et une épaisseur la plus grande de la section de division (81) dans la région la plus épaisse (MA) est considérée comme T2, alors l'expression (1) suivante se vérifie.

$$L1/T1 > L2/T2 \dots (1)$$

**3.** Culasse (32) selon la revendication 1 ou 2, **caractérisée en ce que**
une section inclinée qui s'incline d'un centre de la section de division (81) dans la direction de largeur à un côté du trajet d'écoulement tourbillonnant (80A) est prévue dans une surface d'extrémité de la section de division (81) sur le côté du trajet d'écoulement tourbillonnant (80A), et
dans la section transversale prise suivant la direction longitudinale du passage d'admission (80), un angle d'inclinaison ($\theta$4) de la section inclinée (100) dans la région la plus mince (MI) est plus grand qu'un angle d'inclinaison (θ5) de la section inclinée (106) dans la région la plus épaisse (MA).

4. Culasse (32) selon la revendication 3, **caractérisée en ce que**
la section inclinée (100) dans la région la plus mince (MI) est configurée à partir d'une pluralité de sections inclinées (102, 104) dont les angles d'inclinaison diffèrent, et un total (θ1 + θ2) des angles d'inclinaison de la pluralité de sections inclinées (102, 104) est plus grand qu'un angle d'inclinaison (θ3) de la section inclinée (106) dans la région la plus épaisse (MA).

5. Culasse (32) selon la revendication 3 ou 4, **caractérisée en ce que**
lorsqu'ont été tracées, dans la région la plus mince (MI), une première ligne imaginaire côté amont (LN1) passant par un centre du passage d'admission (80) dans la direction de largeur et une deuxième ligne imaginaire côté amont (LN2) orthogonale à la première ligne imaginaire côté amont (LN1) et passant par une section d'extrémité de la section de division (81) sur le côté du trajet d'écoulement tourbillonnant (80A), et ont été tracées, dans la région la plus épaisse (MA), une première ligne imaginaire côté aval (LN3) passant par le centre du passage d'admission (80) dans la direction de largeur et une deuxième ligne imaginaire côté aval (LN4) orthogonale à la première ligne imaginaire côté aval (LN3) et passant par la section d'extrémité de la section de division (81) sur le côté du trajet d'écoulement tourbillonnant (80A), une aire (S1) d'une région (Ar1), qui est formée par un point d'intersection (P1) de la première ligne imaginaire côté amont (LN1) et de la deuxième ligne imaginaire côté amont (LN2) et la section inclinée (100) dans la région la plus mince (MI), est plus grande qu'une aire (S2) d'une région (Ar2), qui est formée par un point d'intersection (P2) de la première ligne imaginaire côté aval (LN3) et de la deuxième ligne imaginaire côté aval (LN4) et la section inclinée (106) dans la région la plus épaisse (MA).

6. Culasse (32) selon l'une quelconque des revendications 1 à 5, **caractérisée en ce que**
une largeur (W2) du trajet d'écoulement principal (80B) dans la région la plus épaisse (MA) est plus grande qu'une largeur (W1) du trajet d'écoulement principal (80B) dans la région la plus mince (MI).

7. Culasse (32) selon l'une quelconque des revendications 1 à 6, **caractérisée en ce que**
dans la région la plus épaisse (MA), une section entourant une soupape d'admission (42a) qui entoure une soupape d'admission (46) est bombée dans le trajet d'écoulement principal (80B), et un rayon de courbure (R2) d'une largeur du trajet d'écoulement principal (80B) est plus grand qu'un rayon de courbure (R1) d'une largeur du trajet d'écoulement principal (80B) dans la région la plus mince (MI).

8. Culasse (32) selon l'une quelconque des revendications 1 à 7, **caractérisée en ce que**
dans la section transversale prise suivant la direction longitudinale du passage d'admission (80), une extrémité aval (80Ab) du trajet d'écoulement tourbillonnant (80A) est dirigée vers une surface de plafond (32a) d'une chambre de combustion (36), la section de division (81) est courbée vers un côté de la chambre de combustion (36) dans le passage d'admission (80), et le trajet d'écoulement tourbillonnant (80A) est muni : d'une première section courbée (82) qui est courbée dans une direction de séparation du trajet d'écoulement principal (80B) ; et d'une deuxième section courbée (83) qui est courbée dans une direction d'approche du trajet d'écoulement principal (80B).

FIG. 1

EP 3 650 680 B1

FIG. 2

# FIG. 3

# FIG. 4

# FIG. 5

MA

# FIG. 6

# FIG. 7

<u>MI'</u>

# F I G. 8

MA'

**EP 3 650 680 B1**

**Patent documents cited in the description**

- JP H11210479 A

- JP 2016173049 A